# EUROPÄISCHE PATENTSCHRIFT

(11) **EP 2 734 860 B1**
(45) Veröffentlichungstag und Bekanntmachung des Hinweises auf die Patenterteilung: **05.06.2019**
(21) Anmeldenummer: 12756648.7
(22) Anmeldetag: 13.07.2012
(51) Int. Cl.: G01S 7/521, B60R 19/48, G10K 11/00

(54) **MONTAGEVERBUND EINES KRAFTFAHRZEUGS**
COMPOSITE ASSEMBLY FOR A MOTOR VEHICLE
CONNEXION DE MONTAGE D'UN VÉHICULE AUTOMOBILE

(30) Priorität: 23.07.2011 DE 102011108403
(43) Veröffentlichungstag der Anmeldung: 28.05.2014
(73) Patentinhaber: Volkswagen Aktiengesellschaft, 38440 Wolfsburg (DE)
(72) Erfinder: PRAUSSE, Claudia, 38120 Braunschweig (DE); MAX, Stephan, 38518 Gifhorn (DE); ZALESKI, Olgierd, 22391 Hamburg (DE); BOCKSTEDTE, Andreas, 21635 Jork (DE)
(86) Internationale Anmeldenummer: PCT/EP2012/002959
(87) Internationale Veröffentlichungsnummer: WO 2013/013783

(56) Entgegenhaltungen:
- DE-A1- 4 114 180
- DE-A1-102006 034 997
- DE-A1-102006 034 997
- DE-A1-102008 017 067
- DE-B- 1 276 515
- DE-C- 906 425
- US-A1- 2007 115 102
- US-A1- 2007 144 261

## Beschreibung

Die Erfindung betrifft einen Montageverbund eines Kraftfahrzeugs gemäß dem Oberbegriff von Patentanspruch 1.

Es ist aus designtechnischen Gründen zunehmend üblich, elektroakustische Wandler (im Folgenden beispielhaft Abstandssensor genannt) verdeckt hinter einem Bauteil des Kraftfahrzeugs (beispielsweise Stoßfängerverkleidung) einzubauen.

Dies hat zwar den Vorteil, dass das Design eines Kraftfahrzeugs im Bereich der montierten Abstandssensoren nicht durch diese ansonsten sichtbaren Abstandssensoren beeinträchtigt wird, bringt jedoch auch bestimmte funktionelle Nachteile mit sich.

Problematisch ist nämlich, dass der Abstandssensor bei der verdeckten Montage Ultraschallwellen durch ein Wandelement eines Kraftfahrzeug senden und empfangen muss, wodurch die Effizienz der Verbreitung von Ultraschallwellen einerseits und die Sensibilität bzw. Empfindlichkeit des Abstandssensors andererseits abnimmt.

Dabei lässt sich das Abstrahlungsverhalten von verdeckt montierten Abstandssensoren prinzipiell in zwei Fälle unterteilen:
Zum einen findet eine "direkte" Schallabstrahlung senkrecht zur Oberfläche des Wandelementes statt, zum anderen eine "indirekte" Schallabstrahlung in etwa unter einem Winkel von 45 Grad, bedingt durch auf dem Wandelement erzeugte Oberflächenwellen.

Insgesamt führt dies zu einer Abstrahlungscharakteristik, bei der in einem Bereich des Abstrahlwinkels von etwa ±22 Grad ein deutlicher Einbruch im Schalldruckpegel zu verzeichnen ist.

Dieser "partielle Blindbereich" führt dazu, dass bei der Applikation von Abstandssensoren stets sichergestellt werden muss, dass dieser genannte Blindbereich durch einen benachbarten Abstandssensor abgedeckt wird.

Aus der DE 10 2006 034 997 A1 ist ein Montageverbund eines Kraftfahrzeugs mit den Merkmalen vom Oberbegriff des Patentanspruchs 1 bekannt. Dabei wird ein Zwischenelement eingesetzt, welches plattenförmig und im Grundriss rechteckig ausgebildet sein kann. Des Weiteren wird auch vorgeschlagen, das Zwischenelement kegelstumpfartig auszubilden. Durch das Zwischenelement soll die Richtwirkung des elektroakustischen Wandlers und dessen Empfindlichkeit günstig beeinflusst werden.

Der US 2007/0115102 A1 ist ein Abstandssensor entnehmbar, der hinter einem Stoßfänger verdeckt montiert ist. Der Abstandssensor besteht aus einem Gehäuse. In dem Gehäuse sind ein Ultraschallvibrator, ein Vibrationsabsorptionselement mitsamt einem Fixierelement sowie eine Platine mitsamt einem elektrischen Anschluss zu einer nicht näher dargestellten Steueinheit untergebracht. Der Abstandssensor weist ferner ein gesondertes Ultraschallweiterleitungselement auf, welches in einem Durchgangsloch im Boden des Gehäuses eingesetzt ist. So steht das Ultraschallweiterleitungselement sowohl mit dem Ultraschallvibrator als auch mit dem Stoßfänger in Kontakt. Der gesamte Abstandssensor ist mittels einer das Gehäuse abdeckenden Kappe rastend am Stoßfänger befestigt.

Die US 2007/0144261 A1 beschreibt schließlich einen Ultraschall-Sensor und ein Sendeelement, welches Ultraschallwellen zu einem Objekt sendet. Ferner ist im Ultraschallsensor ein Empfangselement zum Empfangen von Ultraschallwellen offenbart. Es ist ein Empfangsabschnitt eines Kraftfahrzeugs vorhanden, welcher zu einem Empfang von reflektierten Schallwellen dient. Ein Schwingabschnitt wird durch Ultraschallwellen, die vom Empfangsabschnitt über ein Stützteil an den Schwingabschnitt weitergeleitet werden, zum Schwingen angeregt. Eine Montagefläche des Stützteils ist über eine Verbindungsschicht mit dem Empfangsabschnitt verbunden. Über ein Schwingungserfassungselement werden die Schwingungen des Schwingabschnitts erfasst und in Spannungssignale umgewandelt. Die Spannungssignale werden durch ein Schaltungselement weiterverarbeitet und über einen elektrischen Anschluss an eine nicht dargestellte Steuereinheit weitergegeben. Über das bereits erwähnte Stützteil wird ein Abstand zwischen dem membranartigen Schwingabschnitt und dem Empfangsabschnitt gebildet, wodurch der Schwingabschnitt geschützt und damit die Funktionssicherheit des Ultraschallsensors verbessert werden kann.

DE 4114180 A1 bezieht sich auf einen Ultraschallsensor in einem Fahrzeug, wobei ein Zwischenelement zwischen dem Sensor und dem Wandelement des Fahrzeugs sich befindet.

Aufgabe der Erfindung ist es, eine alternative Möglichkeit für einen Montageverbund eines Kraftfahrzeugs bereitzustellen, welcher eine sehr flexible Beeinflussung des Schallabstrahlungsverhaltens bzw. der Empfindlichkeit eines montierten Abstandssensors ermöglicht.

Diese Aufgabe wird durch die Merkmale von Patentanspruch 1 gelöst. Vorteilhafte Weiterbildungen sind den Unteransprüchen zu entnehmen.

Die Erfindung geht daher aus von einem Montageverbund eines Kraftfahrzeugs, umfassend wenigstens einen elektroakustischen Wandler zur Abgabe von Schallwellen und wenigstens ein Wandelement des Kraftfahrzeugs, hinter dem der Wandler verdeckt montiert ist, wobei zwischen dem Wandler und dem Wandelement ein Zwischenelement zur Beeinflussung des Schallabstrahlverhaltens angeordnet ist und das Zwischenelement eine dem Wandelement zugewandte Auflagefläche zur Weiterleitung der Schallwellen aufweist.

Innerhalb der Auflagefläche ist wenigstens eine Ausnehmung gebildet, bei der keine Auflage des Zwischenelementes auf dem Wandelement erfolgt.

Unter Auflage soll hierbei außer einer unmittelbaren auch eine mittelbare Auflage verstanden werden, bei der zwischen der Auflagefläche und dem Wandelement beispielsweise eine Klebeschicht eingebracht ist.

Durch dieses Merkmal des Zwischenelementes ist es möglich, die durch den Abstandssensor in das Wandelement eingebrachten Schallwellen so zu formen, dass sich eine gewünschte Abstrahlungscharakteristik ergibt. Insbesondere ist es möglich, die Abstrahlungscharakteristik zu "glätten", also ohne nennenswerte Einbrüche des Schalldruckpegels im besagten Winkelbereich von etwa ±22 Grad bereitzustellen.

Eine Weiterbildung der Erfindung sieht dabei vor, dass die Auflagefläche mehrere Ausnehmungen aufweist. Die Ausnehmungen können dabei beispielsweise rechteckförmig sein. Durch die Ausnehmungen werden die durch das Zwischenelement gebildeten Auflagezonen mehrfach aufgehoben bzw. unterbrochen, wodurch die Flexibilität in der Erzeugung einer gewünschten Abstrahlungscharakteristik weiter erhöht wird.

Nach erfindungsgemäßen Merkmalen ist innerhalb der Ausnehmung wenigstens einen Bereich gebildet, in dem wiederum eine Auflage des Zwischenelementes auf dem Wandelement erfolgt. Dabei kann der Bereich kreisförmig oder rechteckförmig sein. Bei Bildung mehrerer derartiger Bereiche innerhalb der Ausnehmung ist auch eine Mischung von Querschnittsformen denkbar. So können mehrere Bereiche beispielsweise kreisförmig und/oder rechteckförmig ausgebildet sein. Andere Querschnittsformen sind auch denkbar. Es hat sich für eine vertikale Fokussierung des Schallabstrahlungswinkels als vorteilhaft erwiesen, wenn die Auflagefläche und die Ausnehmung in ihrem Umriss rechteckförmig sind. Im Montagezustand des Montageverbundes sind dann die Längsseiten der besagten Umrisse in etwa horizontal auszurichten.

Eine vertikale Fokussierung des Schallabstrahlungswinkels ist insbesondere bei Abstandssensoren erwünscht, die als Einparkhilfen verwendet werden. Hierdurch kann eine unbeabsichtigte Detektierung der Fahrbahnoberflächen deutlich reduziert werden.

Um das Abklingverhalten des aus elektroakustischem Wandler, Zwischenelement und Wandelement bestehenden Montageverbundes zu verbessern, kann zusätzlich vorgesehen sein, in die Ausnehmung bzw. in die Ausnehmungen des Zwischenelementes jeweils zusätzlich eine Schall absorbierende Masse, beispielsweise Schaum oder dergleichen einzubringen.

Zudem hat es sich in Versuchen gezeigt, dass eine Ausdehnung von durch den Abstandssensor erzeugten Oberflächenwellen auf dem Wandelement effektiv begrenzt werden kann, wenn nach weiteren, zur Erfindung gehörenden Merkmalen das Zwischenelement zumindest bereichsweise von einem Dämpfungselement umgeben ist, wobei das Dämpfungselement ebenfalls auf dem Wandelement aufliegt (bspw. mit diesem verklebt ist) und zum Zwischenelement einen Abstand aufweist.

Die angestrebte Wirkung kann noch dadurch verbessert werden, wenn das Dämpfungselement rahmenartig um das Zwischenelement angeordnet ist.

Weitere Vorteile und Ausgestaltungen der Erfindung werden anhand von Ausführungsbeispielen deutlich, was mit Hilfe der beiliegenden Figuren näher erläutert werden soll. Dabei bedeuten
- Fig. 1: eine prinziphafte, perspektivische Darstellung eines erfindungsgemäßen Montageverbundes (bevorzugtes Ausführungsbeispiel),
- Fig. 2: eine Schnittdarstellung des Montageverbundes aus Fig. 1 gemäß Schnittverlauf II (Längsschnitt)
- Fig. 3: eine prinziphafte, perspektivische Darstellung des erfindungsgemäßen Montageverbundes mit Blick auf die Auflagefläche des Zwischenelementes, wobei das Wandelement des Kraftfahrzeugs weggelassen ist,
- Fig. 4: eine prinziphafte Darstellung eines zweiten Ausführungsbeispiels, wobei nur die Auflagefläche des Zwischenelementes dargestellt ist,
- Fig. 5: eine prinziphafte Darstellung eines dritten Ausführungsbeispiels gemäß Ansicht wie in Fig. 4,
- Fig. 6: die prinziphafte Darstellung eines vierten Ausführungsbeispiels, ebenfalls in einer Ansicht wie in Fig. 4,
- Fig. 7: die Darstellung einer Schall-Abstrahlungscharakteristik eines verdeckt montierten Abstandssensors ohne und mit den erfindungsgemäßen Maßnahmen und
- Fig. 8: ein Kraftfahrzeug mit erfindungsgemäßen Montageverbunden.

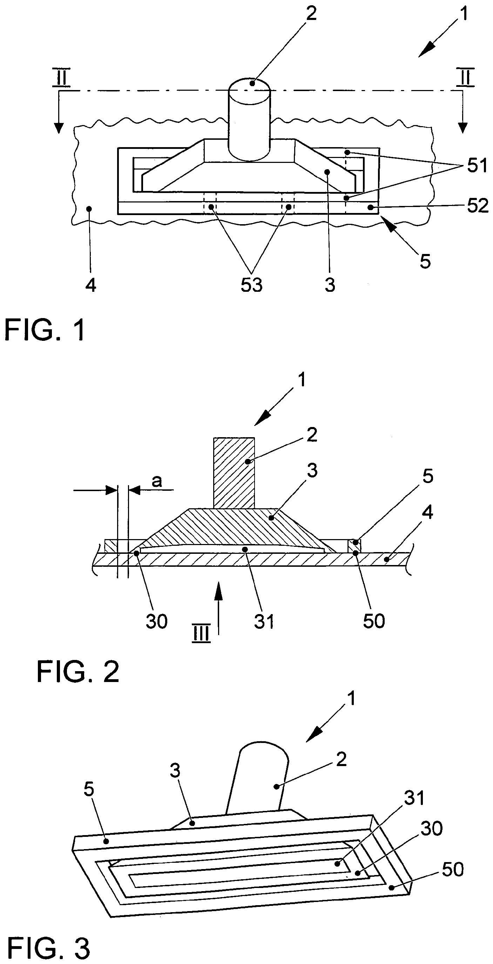

Zunächst wird auf die Fig. 1 bis 3 Bezug genommen.

Darin ist ein Montageverbund 1 dargestellt, welcher einen Abstandssensor 2 umfasst, welcher hinter einem Wandelement 4 eines Kraftfahrzeugs in Form einer Stoßfängerverkleidung verdeckt montiert ist. Der Abstandssensor 2 ist also in einer Blickrichtung von außen auf das Kraftfahrzeug nicht sichtbar. Er kann in nicht dargestellter Weise Schwingungen erzeugen und empfangen.

Zwischen dem Abstandssensor 2 und dem Wandelement 4 ist ein klotzförmiges Zwischenelement 3 vorgesehen, über welches der Abstandssensor 2 am Wandelement 4 gehaltert ist. Dabei liegt das Zwischenelement 3 mit einer Auflagefläche 30 am Wandelement 4 auf und kann beispielsweise mit diesem verklebt sein. Andere Befestigungsarten, wie bspw. Ultraschallschweißen oder Reibschweißen sind jedoch auch denkbar.

Es ist ferner ersichtlich, dass innerhalb der Auflagefläche 30 eine Ausnehmung 31 vorgesehen ist, wo keine Auflagefläche für das Wandelement 4 gebildet ist. Im Bereich der Ausnehmung 31 liegt das Zwischenelement 3 also nicht unmittelbar bzw. mittelbar (beispielsweise über eine Klebeschicht) auf dem Wandelement 4 auf.

Die Auflagefläche 30 und die Ausnehmung 31 sind in ihrem Umriss jeweils rechteckförmig ausgebildet (vgl. insbesondere Fig. 3).

Des Weiteren ist in den Figuren ein Dämpfungselement 5 zu erkennen, welches rahmenartig um das Zwischenelement 3 angeordnet ist. Dabei ist das Dämpfungselement in seinem Umriss ebenfalls rechteckig ausgebildet und in einem Abstand a um das Zwischenelement 3 angeordnet. Das Dämpfungselement 5 liegt seinerseits mit einer Auflagefläche 50 auf dem Wandelement 4 auf und kann mit diesem ebenfalls verklebt sein. Das Dämpfungselement 5 muss jedoch nicht unbedingt rahmenartig um das Zwischenelement 3 angeordnet sein. Es ist beispielsweise auch denkbar, dass ein Endteil 52 an Schnittflächen 51 abgeschnitten ist, wenn z.B. die geometrischen Verhältnisse in diesem Bereich eine lokale Steifigkeitserhöhung nicht erfordern.

Genauso ist beispielsweise das Einbringen von Unterbrechungen 53 (gestrichelt angedeutet) denkbar.

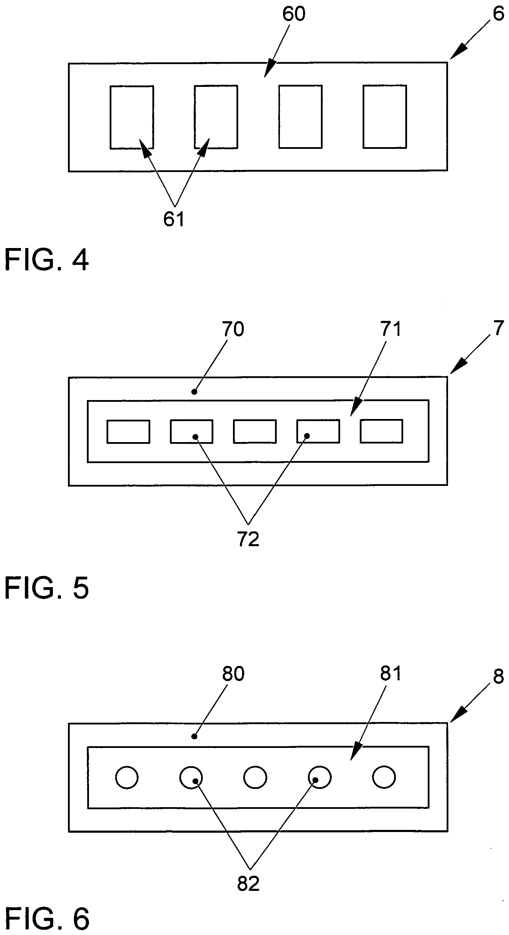

In den Fig. 4 bis 6 sind nunmehr weitere Ausführungsbeispiele für Zwischenelemente 6, 7 und 8 ersichtlich, welche vergleichbare Funktionen wie das beschriebene Zwischenelement 3 aufweisen. Sie unterscheiden sich im Wesentlichen durch die Ausgestaltung ihrer Auflagefläche, mit der sie auf einem Wandelement, wie bspw. vorstehend beschrieben, aufliegen können.

So ist das Zwischenelement 6 mit einer Auflagefläche 60 versehen, innerhalb derer mehrere Ausnehmungen 61 ausgebildet sind. Sowohl die Auflagefläche 60 als auch die Ausnehmungen 61 sind ihrem Umriss rechteckförmig ausgebildet.

Das Zwischenelement 7 weist eine Auflagefläche 70 auf, innerhalb der eine Ausnehmung 71 ausgebildet ist. Innerhalb der Ausnehmung 71 sind wiederum mehrere Bereiche 72 vorgesehen, welche eine bereichsweise Auflagefläche zu einem Wandelement bilden können. Die Auflagefläche 70, die Ausnehmung 71 und auch die Bereiche 72 sind jeweils in ihrem Umriss rechteckförmig ausgebildet.

Schließlich zeigt das Zwischenelement 8 eine Ausführung mit einer Auflagefläche 80, bei der im Gegensatz zum Zwischenelement 7 innerhalb einer Ausnehmung 81 eingebrachte

Bereiche 82 kreisförmig ausgebildet sind. Es bilden also sowohl die Auflagefläche 80 als auch die Bereiche 82 eine mögliche Auflage zu einem Wandelement. Mit der kreisförmigen, im Extremfall sogar nahezu punktförmigen Ausbildung der Bereiche 82 ist innerhalb der Ausnehmungen 81 eine sehr unfokussierte Weiterleitung der erzeugten Schallwellen möglich, was unter Umständen bei nicht für einen Einparkvorgang eingesetzte Abstandssensoren gewünscht sein kann.

Bei den gezeigten Ausführungsbeispielen kann in die in die Ausnehmungen 31,61,71 und 81 jeweils zusätzlich eine Schall absorbierende Masse, beispielsweise Schaum oder dergleichen eingebracht sein (nicht dargestellt), um das Abklingverhalten des aus elektroakustischem Wandler 2, Zwischenelement 3,6,7 bzw. 8 und Wandelement 4 bestehenden Montageverbundes 1 zu verbessern.

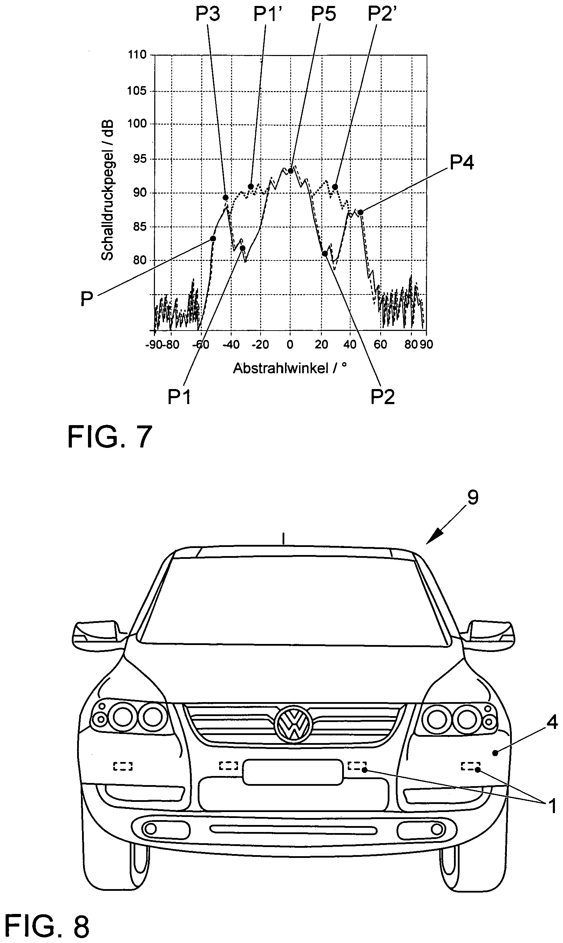

Schließlich soll anhand von Fig. 7 ein Schalldruckpegel-Verlauf P eines verdeckt montierten Abstandssensors beispielhaft dargestellt werden.

So weist der Schalldruckpegel-Verlauf P ohne die erfindungsgemäße Ausgestaltung des Montageverbundes gewöhnlich ein Maximum P5 des Schalldrucks in einem Abstrahlwinkelbereich von etwa 0 Grad (direkte Abstrahlung, senkrecht zur Oberfläche des Wandelementes) auf. Beidseitig neben diesem Maximum P5, in einem Winkelbereich des Abstrahlwinkels von jeweils etwa 45 Grad sind weitere örtliche Maxima P3 und P4 (indirekte, durch Oberflächenwelle bedingte Abstrahlung) zu verzeichnen. Zwischen den Schalldruckpegeln P5 und P3 bzw. P5 und P4 bilden sich bei jeweils etwa 22 Grad Abstrahlwinkel Einbrüche P1 und P2 im Schalldruckpegel aus.

Durch erfindungsgemäße Ausgestaltung des Montageverbundes lassen sich diese Einbrüche P1 und P2 nach oben hin anheben (P1' und P2'), so dass insgesamt ein geglätteter Schalldruckpegel-Verlauf entsteht.

Schließlich ist in Fig. 8 ein Kraftfahrzeug 9 gezeigt, welches im Bereich einer vorderen Stoßfängerverkleidung 4 mehrere erfindungsgemäße Montageverbunde 1 aufweist. Diese können, je nach Bedarf, auch an anderen Stellen des Kraftfahrzeugs, bspw. im Tür-, Schweller- oder Dachbereich vorgesehen sein (nicht gezeigt).

### Bezugszeichenliste

- 1: Montageverbund
- 2: Abstandssensor
- 3: Zwischenelement
- 30: Auflagefläche
- 31: Ausnehmung
- 4: Wandelement (Stoßfängerverkleidung)
- 5: rahmenartiges Dämpfungselement
- 50: Auflagefläche
- 51: Schnittfläche
- 52: abgeschnittenes Endteil
- 53: Unterbrechung
- 6: Zwischenelement
- 60: Auflagefläche
- 61: Ausnehmungen
- 7: Zwischenelement
- 70: Auflagefläche
- 71: Ausnehmung
- 72: Bereiche mit Kontakt zum Wandelement
- 8: Zwischenelement
- 80: Auflagefläche
- 81: Ausnehmung
- 82: Bereiche mit Kontakt zum Wandelement
- 9: Kraftfahrzeug

- a: Abstand des rahmenartigen Dämpfungselementes vom Zwischenelement
- P: Schalldruckpegel-Verlauf
- P1: Einbruch des Schalldruckpegels bei etwa -22° Abstrahlwinkel
- P1': geglätteter Schalldruckpegel bei etwa -22° Abstrahlwinkel
- P2: Einbruch des Schalldruckpegels bei etwa +22° Abstrahlwinkel
- P2': geglätteter Schalldruckpegel bei etwa +22° Abstrahlwinkel
- P3: örtliche Schalldruckpegelspitze bei etwa -45° Abstrahlwinkel
- P4: örtliche Schalldruckpegelspitze bei etwa +45° Abstrahlwinkel
- P5: Schalldruckpegel-Maximum bei etwa 0° Abstrahlwinkel

## Patentansprüche

1. Montageverbund (1) eines Kraftfahrzeugs (9), umfassend wenigstens einen Abstandssensor (2) und wenigstens ein Wandelement (4) des Kraftfahrzeugs (9), hinter dem (4) der Abstandssensor (2) verdeckt montiert ist, wobei zwischen dem Abstandssensor (2) und dem Wandelement (4) ein klotzförmiges Zwischenelement (3, 6, 7, 8) zur Beeinflussung des Schallabstrahlverhaltens (P) angeordnet ist, über das (3, 6, 7, 8) der Abstandssensor (2) am Wandelement (4) befestigt ist und welches (3, 6, 7, 8) eine dem Wandelement (4) zugewandte Auflagefläche (30, 60, 70, 80) zur Weiterleitung der Schallwellen aufweist, wobei innerhalb der Auflagefläche (30, 60, 70, 80) wenigstens eine Ausnehmung (31, 61, 71, 81) gebildet ist, bei der keine Auflage des Zwischenelementes (3, 6, 7, 8) auf dem Wandelement (4) erfolgt, **dadurch gekennzeichnet, dass** der Abstandssensor (2) zur Abgabe von Schallwellen ausgebildet und innerhalb der Ausnehmung (71, 81) wenigstens ein Bereich (72, 82) gebildet ist, in dem eine Auflage des Zwischenelementes (7, 8) mit dem Wandelement (4) erfolgt und das Zwischenelement (3) zumindest bereichsweise von einem Dämpfungselement (5) umgeben ist, wobei das Dämpfungselement (5) auf dem Wandelement (4) aufliegt und zum Zwischenelement (3) einen Abstand (a) aufweist.

2. Montageverbund nach Anspruch 1, **dadurch gekennzeichnet, dass** die Auflagefläche (60) mehrere Ausnehmungen (61) aufweist.

3. Montageverbund nach Anspruch 1 oder 2, **dadurch gekennzeichnet, dass** der wenigstens eine Bereich (82) kreisförmig oder rechteckförmig (72) ist.

4. Montageverbund nach einem der Ansprüche 1 bis 3, **dadurch gekennzeichnet, dass** die Auflagefläche (30, 60, 70, 80) und die Ausnehmung (31, 61, 71, 81) in ihrem Umriss rechteckförmig sind.

5. Montageverbund nach einem der vorhergehenden Ansprüche, **dadurch gekennzeichnet, dass** das Dämpfungselement (5) rahmenartig um das Zwischenelement (3) angeordnet ist.

6. Montageverbund nach einem der Ansprüche 1 bis 5, **dadurch gekennzeichnet, dass** in die Ausnehmung (31, 61, 71, 81) eine Schall absorbierende Masse eingebracht ist.

## Claims

1. Mounting assembly (1) of a motor vehicle (9), comprising at least one distance sensor (2) and at least one wall element (4) of the motor vehicle (9), behind which (4) the distance sensor (2) is mounted in a concealed manner, wherein a block-like intermediate element (3, 6, 7, 8) for influencing the sound emission behaviour (P) is arranged between the distance sensor (2) and the wall element (4), via which (3, 6, 7, 8) the distance sensor (2) is fastened to the wall element (4) and which (3, 6, 7, 8) has a bearing surface (30, 60, 70, 80), facing the wall element (4), for transmitting the sound waves, wherein within the bearing surface (30, 60, 70, 80) at least one recess (31, 61, 71, 81) is formed, at which the intermediate element (3, 6, 7, 8) does not bear against the wall element (4), **characterized in that** the distance sensor (2) is designed to emit sound waves and within the recess (71, 81) at least one region (72, 82) is formed in which the intermediate element (7, 8) bears against the wall element (4) and the intermediate element (3) is at least regionally surrounded by a damping element (5), wherein the damping element (5) rests on the wall element (4) and is at a distance (a) from the intermediate element (3).

2. Mounting assembly according to Claim 1, **characterized in that** the bearing surface (60) has a plurality of recesses (61).

3. Mounting assembly according to Claim 1 or 2, **characterized in that** the at least one region (82) is circular or rectangular (72).

4. Mounting assembly according to one of Claims 1 to 3, **characterized in that** the bearing surface (30, 60, 70, 80) and the recess (31, 61, 71, 81) have rectangular contours.

5. Mounting assembly according to one of the preceding claims, **characterized in that** the damping element (5) is arranged in a frame-like manner around the intermediate element (3).

6. Mounting assembly according to one of Claims 1 to 5, **characterized in that** a sound-absorbing mass has been introduced into the recess (31, 61, 71, 81).

## Revendications

1. Ensemble composite de montage (1) d'un véhicule automobile (9), comprenant au moins un détecteur de distance (2) et au moins un élément de paroi (4) du véhicule automobile (9), derrière lequel (4) le détecteur de distance (2) est monté en position masquée, dans lequel un élément intermédiaire en forme de bloc (3, 6, 7, 8) est disposé entre le détecteur de distance (2) et l'élément de paroi (4) pour influencer le niveau d'émission sonore (P), par lequel (3, 6, 7, 8) le détecteur de distance (2) est fixé à l'élément de paroi (4) et qui (3, 6, 7, 8) présente une face d'appui (30, 60, 70, 80) tournée vers l'élément de paroi (4) pour la retransmission des ondes sonores, dans lequel au moins un évidement (31, 61, 71, 81) est formé à l'intérieur de la face d'appui (30, 60, 70, 80), dans lequel il ne se produit aucun appui de l'élément intermédiaire (3, 6, 7, 8) sur l'élément de paroi (4), **caractérisé en ce que** le détecteur de distance (2) est configuré pour émettre des ondes sonores et au moins une région (72, 82) est formée à l'intérieur de l'évidement (71, 81), dans laquelle il se produit un appui de l'élément intermédiaire (3, 6, 7, 8) sur l'élément de paroi (4) et l'élément intermédiaire (3) est entouré au moins localement par un élément d'amortissement (5), dans lequel l'élément d'amortissement (5) est appliqué sur l'élément de paroi (4) et présente une distance (a) par rapport à l'élément intermédiaire (3).

2. Ensemble composite de montage selon la revendication 1, **caractérisé en ce que** la face d'appui (60) présente plusieurs évidements (61).

3. Ensemble composite de montage selon une revendication 1 ou 2, **caractérisé en ce que** ladite au moins une région (82) est de forme circulaire ou de forme rectangulaire (72).

4. Ensemble composite de montage selon l'une quelconque des revendications 1 à 3, **caractérisé en ce que** la face d'appui (30, 60, 70, 80) et l'évidement (31, 61, 71, 81) présentent un contour rectangulaire.

5. Ensemble composite de montage selon l'une quelconque des revendications précédentes, **caractérisé en ce que** l'élément d'amortissement (5) est disposé en forme de cadre autour de l'élément intermédiaire (3).

6. Ensemble composite de montage selon l'une quelconque des revendications 1 à 5, **caractérisé en ce qu'**une masse d'absorption des sons est introduite dans l'évidement (31, 61, 71, 81).
